# EUROPEAN PATENT APPLICATION

(11) **EP 4 778 815 A1**
(43) Date of publication of application: **22.07.2026**
(21) Application number: 26152034.0
(22) Date of filing: 15.01.2026
(51) Int. Cl.: B62J 43/28, B62K 19/40, B62M 6/90

(54) **BICYCLE WITH MODULAR BATTERIES AND ADAPTER**

(30) Priority: 17.01.2025 US 202563746484 P
(71) Applicant: Specialized Bicycle Components, Inc., Morgan Hill, CA 95037 (US)
(72) Inventor: SONDEREGGER, Marco Werner, 95037 Morgan Hill (US); CABELLO, Jose Daniel Rueda, 95037 Morgan Hill (US); PALLURE, Marc, 95037 Morgan Hill (US); BUCKLEY, Joseph Edward, 95037 Morgan Hill (US)
(74) Representative: Forresters IP LLP

(57) **Abstract**

A bicycle includes a front wheel (18), a rear wheel (22), and a frame (14) coupled to and supported by the front wheel and the rear wheel, the frame having a frame member with a cavity defined therein (96). The bicycle also includes a battery (90) disposed within the cavity, and an adapter (508) that is removably coupled to the battery and removably coupled to the frame member. The adapter includes a storage compartment (516) that is at least partially defined by the frame member.

## Description

### CROSS-REFERENCE TO RELATED APPLICATIONS

This application claims priority to U.S. Provisional Application No. 63/746,484, filed January 17, 2025.

### BACKGROUND

The present disclosure relates generally to bicycles, and more specifically to electric bicycles and batteries for electric bicycles.

Electric bicycles, typically referred to as "e-bikes," include electrical components, such as electric motors, power supplies, controllers, data displays, brake lever switches, etc. One or more of the electrical components may be electromechanically operated during use of the electric bicycle. For example, an electric motor may be operated to propel the electric bicycle. Alternatively, the electric motor may be operated to supplement mechanical and user applied input power from the crankshaft to propel the electric bicycle.

Electric bicycles also include a frame, and may have a tube that defines a cavity to receive a battery. In many examples, the cavity is sized and shaped such that the battery can be inserted and removed from the cavity, and replaced as needed throughout the lifetime of the electric bicycle. In further examples, the cavity is sized and shaped to receive one size of battery, and the battery is latched or otherwise removably secured in place within the cavity.

### BRIEF DESCRIPTION OF DRAWINGS

FIG. 1 is a side view of a bicycle according to one embodiment.
FIG. 2 is a perspective view of the bicycle of FIG. 1, illustrating an opening into a cavity in a frame member for insertion of a battery.
FIG. 3 is a partial, perspective view of the bicycle of FIG. 1, with a cover attached over the cavity.
FIG. 4 is an enlarged, partial view of a frame member and cavity according to another embodiment, illustrating a battery and an adapter coupled to the battery, with both the adapter and the battery being disposed within the cavity.
FIG. 5 is an enlarged, partial cross-sectional view of the frame member of FIG. 4, further illustrating the battery and the adapter within the cavity.
FIG. 6 is a perspective view of the battery and the adapter of FIG. 4, further illustrating a lock mechanism removably coupled to the adapter.
FIG. 7A is a front perspective view of the adapter of FIG. 4.
FIG. 7B is a rear perspective view of the adapter of FIG. 4.
FIG. 7C is a top perspective view of the adapter of FIG. 4.
FIG. 7D is a top view of the adapter of FIG. 4.
FIG. 8 is a perspective view of the adapter of FIG. 4, further illustrating a cover coupler removably coupled to the adapter.
FIG. 9A is a perspective view of an adapter according to another embodiment.
FIG. 9B is another perspective view of the adapter of FIG. 9A, illustrating an object contained within a storage compartment of the adapter.
FIG. 10 is an enlarged, partial view of the frame member of FIG. 2, illustrating a bracket removably coupled to the adapter and the battery of FIG. 4 and disposed within the cavity of the frame member.
FIG. 11 is a perspective view of the bracket of FIG. 10 removably coupled to the adapter and the battery of FIG. 4.
FIG. 12 is a perspective view of the bracket of FIG. 10 removably coupled to the adapter of FIG. 4.
FIG. 13A is a perspective view of the bracket of FIG. 10.
FIG. 13B is another perspective view of the bracket of FIG. 10.
FIG. 14 is a perspective view of a bracket according to another embodiment, the bracket being removably coupled to the adapter of FIGS. 9A and 9B.
FIG. 15 is a partial, cross-sectional view of the frame member and cavity of FIG. 4, and another battery (without the adapter of FIG. 4) disposed within the frame member.
FIG. 16 is an enlarged view of a lock mechanism removably coupled to the battery of FIG. 15 for insertion into the frame member of FIG. 4.
FIG. 17 is a partial, perspective view of the frame member and the cavity of FIG. 2, and the bracket of FIG. 10 removably coupled to another battery (without the adapter of FIG. 4) with the bracket and battery disposed within the frame member.
FIG. 18 is a partial, cross-sectional view of the frame member of FIG. 17, illustrating the bracket of FIG. 10 removably coupled to the battery of FIG. 17.

### DETAILED DESCRIPTION

Before any examples are explained in detail, it is to be understood that the disclosure is not limited in its application to the details of construction and the arrangement of components set forth in the following description or illustrated in the following drawings. The disclosure is capable of other examples and of being practiced or of being carried out in various ways.

In accordance with one example, a bicycle may include a front wheel, a rear wheel, and a frame coupled to and supported by the front wheel and the rear wheel, the frame having a frame member with a cavity defined therein. The bicycle may also include a battery disposed within the cavity, and an adapter that is removably coupled to the battery and removably coupled to the frame member. The adapter may include a storage compartment that is at least partially defined by the frame member.

In accordance with another example, a bicycle may include a front wheel, a rear wheel, and a frame coupled to and supported by the front wheel and the rear wheel. The frame may include a frame member with a cavity defined therein. The bicycle may also include a battery disposed within the cavity, and a cover removably coupled to the frame member to enclose the cavity and secure the battery within the cavity. The bicycle may also include an adapter removably coupled to the battery and removably coupled to the frame member, and a cover coupler coupled to the adapter and configured to facilitate coupling of the cover to the frame member. The cover coupler may include an adapter rail.

In accordance with another example, an assembly may include a battery configured to power a motor of an electric bicycle. The assembly may also include an adapter removably coupled to one end of the battery, the adapter including a plurality of walls defining at least a portion of a storage compartment. A gap may extend between two of the plurality of walls.

In accordance with another example, a method of replacing a battery in an electric bicycle includes removing a first battery from a cavity in a frame member of the electric bicycle. The first battery has a first length. The method further includes attaching an adapter to an end of a second battery. The second battery has a second length that is less than the first length. The method further includes inserting the combined adapter and second battery into the cavity. The adapter includes a storage compartment that is at least partially defined by the frame member.

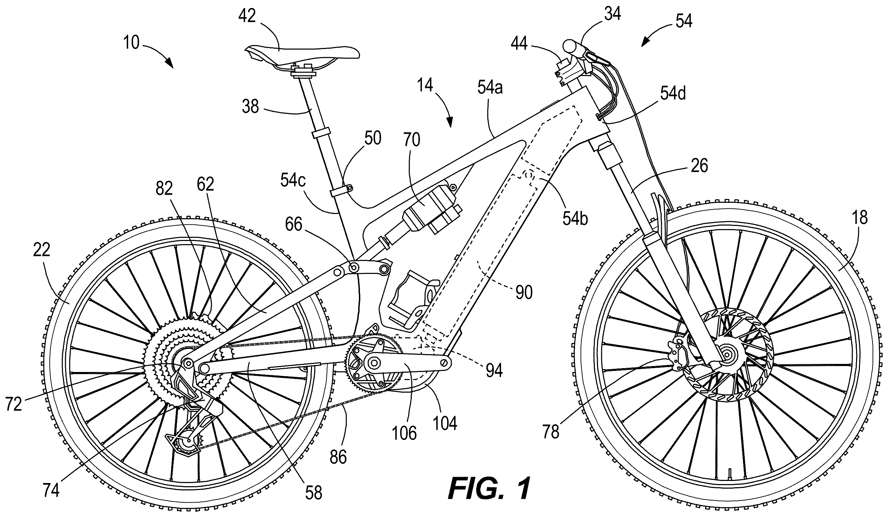

FIGS. 1-3 illustrate a bicycle 10. While the illustrated bicycle 10 is a mountain bicycle, the bicycle 10 may be any type of bicycle, including a road bicycle, a gravel bicycle, or any other type of bicycle. Additionally, while the illustrated bicycle 10 is an electric bicycle ("ebike") powered partially or entirely by an electric motor, in other examples the bicycle 10 may be a non-electric bicycle (i.e., powered only by manual movement of pedals).

As illustrated in FIGS. 1-3, the bicycle 10 may include a frame 14, a front wheel 18, and a rear wheel 22. The frame 14 may be coupled to and supported on the front wheel 18 and the rear wheel 22.

With continued reference to FIGS. 1-3, the bicycle 10 may include a front fork 26 (e.g., coupled to and supported by the front wheel 18), a handlebar 34, a seat post 38, and/or a saddle 42. The handlebar 34 may be coupled to the front fork 26 by a stem 44. The handlebar 34 may be configured to be grasped by a user. The front wheel 18, the rear wheel 22, and/or the handlebar 34 may be used to steer the bicycle 10 when riding the bicycle 10.

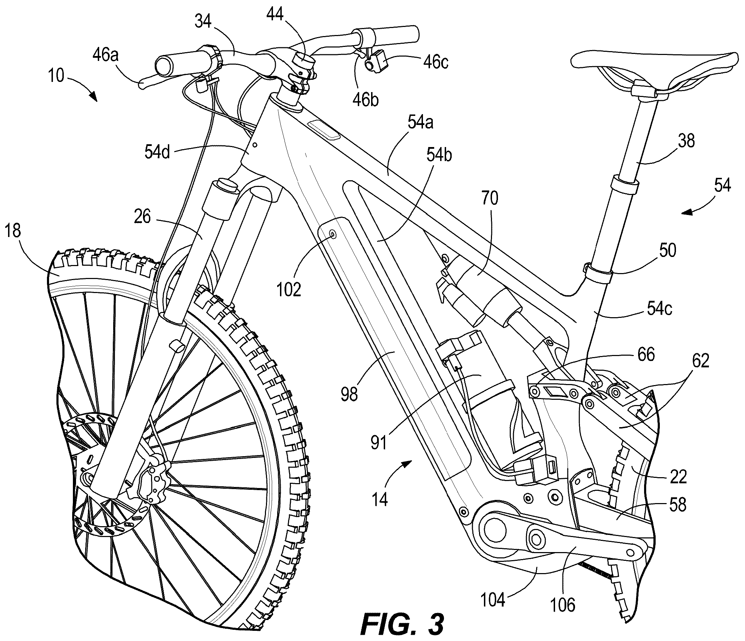

In some embodiments, the bicycle 10 may include control devices 46 (FIG. 3) configured to be operated by the user when riding the bicycle 10. The control devices 46 may include, for example, a front brake lever 46a, a rear brake lever 46b, a shifter 46c, and/or other user operated devices (e.g., a dropper post remote control, an electric bicycle remote control, etc.). For example, the control devices 46 may control the bicycle 10, provide operating parameters of the bicycle 10, and/or display information to a user of bicycle 10. Other embodiments of the bicycle 10 may include other numbers, types, and arrangements of control devices than that illustrated, including control devices that are not located on the handlebar 34.

With continued reference to FIGS. 1-3, the bicycle 10 may include a seat post clamp 50. The seat post 38 may be movably coupled to the frame 14 such that a height of the saddle 42 relative to the frame 14 may be adjustable by the user when using the seat post clamp 50. The saddle 42 may be coupled to the seat post 38, and may be configured to support the user riding the bicycle 10.

The frame 14 of the bicycle 10 may include multiple tube members 54. For example, the multiple tube members 54 may include a top tube member 54a, a down tube member 54b, a seat tube member 54c, and/or a head tube member 54d.

In many examples, the top tube member 54a may be coupled to and disposed between the seat tube member 54c and the head tube member 54d. The down tube member 54b may be coupled to the top tube member 54a and/or the head tube member 54d such that the down tube member 54b extends away from and forms an oblique angle with the top tube member 54a. The head tube member 54d may be disposed between the front fork 26 and the handlebar 34 to interconnect the front fork 26 with the handlebar 34. As such, the user may move the front wheel 18 when steering the bicycle 10 in a desired direction via the handlebar 34. Other embodiments of the bicycle 10 may include other numbers, arrangements, and orientations of frame tube members than that illustrated.

With continued reference to FIGS. 1-3, in some embodiments the frame 14 may include at least one chain stay member 58 and/or at least one seat stay member 62 that couple the rear wheel 22 to the frame 14. The chain stay member 58 may be coupled to (e.g., pivotally coupled to) one or both of the seat tube member 54c and the seat stay member 62. The seat stay member 62 may be coupled to (e.g., pivotally coupled to) one or both of the seat tube member 54c and the chain stay member 58. In some embodiments, the seat stay member 62 may be coupled to the rear wheel 22 and pivotably coupled to the seat tube member 54c by a linkage 66. The linkage 66 may also be coupled to a rear shock mechanism 70 that is pivotably coupled to the top tube member 54a. As such, the seat stay member 62 may be interconnected to the rear shock mechanism 70 by the linkage 66 so that the rear shock mechanism 70 absorbs impact experienced by the rear wheel 22 during operation of the bicycle 10. In other embodiments, the bicycle 10 may include other numbers and arrangements of chain stay members, seat stay members, linkages, and shock mechanisms than that illustrated. In some examples, the bicycle 10 may not include any linkages (e.g., for pivotable coupling of frame components), and/or may not include any shock mechanisms.

With reference to FIG. 1, in some embodiments the bicycle 10 may include a derailleur hanger 72, a rear derailleur 74, a front brake caliper 78, and/or a rear brake caliper 82. The derailleur hanger 72 may be coupled to the seat stay member 62. The rear derailleur 74 may be coupled to the derailleur hanger 72, and thereby interconnected to the frame 14 via the derailleur hanger 72. The rear derailleur 74 may be configured to change a gear at which the bicycle 10 operates at a location proximate the rear wheel 22. The user may operate the shifter 46c (FIG. 3) during operation of the bicycle 10 to perform a gear changing operation. As such, the shifter 46c may actuate the rear derailleur 74 to thereby adjust a chain 86 and change the gear. In other embodiments, the bicycle 10 may include other numbers and arrangements of derailleur hangers, derailleurs, and chains than that illustrated, or may not include a derailleur hanger or derailleur.

With continued reference to FIGS. 1-3, in some embodiments one or more of the frame members 54 of the frame 14 (e.g., top tube member 54a, the down tube member 54b, the seat tube member 54c, and/or the head tube member 54d) may be formed as a hollow frame member. The hollow frame members of the frame 14 may be provided to retain one or more cables (not shown) such as brake cables, shifting cables, electrical cables, etc. within the bicycle 10. In many examples, at least one of the one or more cables may be coupled to at least one of the control devices 46.

In the illustrated embodiments of FIGS. 1-3, the bicycle 10 may include a battery 90 and a motor 94 (FIG. 1). As further described below, the motor 94 may partially or entirely motively power the bicycle 10, and may receive electricity from the battery 90. For example, the battery 90 may be a rechargeable lithium-ion battery pack. One or more of the frame members 54 of the frame 14 (e.g., the down tube member 54b) may also, or alternatively, be formed as a hollow frame member, such as, for example, for retaining the battery 90. In some embodiments, the frame 14 may also house at least a portion of the motor 94 (FIG. 1) within the frame 14 (e.g., below the battery 90 at a bottom bracket or other portion of the bicycle 10).

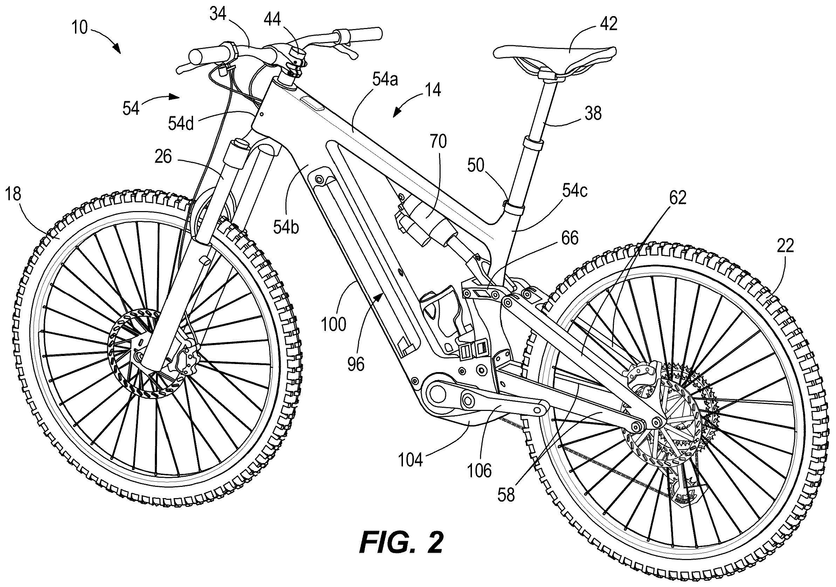

In the illustrated embodiment of FIGS. 1-3, the down tube member 54b defines a battery compartment or cavity 96 (FIG. 2) sized and shaped to receive and retain the battery 90 within the frame 14. In some embodiments, the bicycle 10 may include a cover 98 (FIG. 3) that is removably coupled to the down tube member 54b. The cover 98 may enclose the cavity 96 and secure the battery 90 within the cavity 96 of the down tube member 54b. In some embodiments, the cover 98 may be coupled to the down tube member 54b by a fastening member 102 (FIG. 3; e.g., screw or other fastening mechanism). In many examples, the cavity 96 (FIG. 2) is configured so that the battery 90 may be removed from the cavity 96, such as, for example, by removing the cover 98. In further examples, and as further discussed herein, the battery 90 may be selectively replaced with one or more other batteries. In these or other embodiments, one or more other of the frame members 54 of the frame 14 may define a cavity similar to cavity 96.

In the illustrated embodiment of FIGS. 1-3, an opening 100 (FIG. 2) to the cavity 96 is located along the side of the down tube member 54b, such that the battery 90 may be inserted laterally into the cavity 96. In other examples, the frame 14 may include an opening for example along a lower end of the down tube member 54b, or along a top end of the down tube member 54b, such that the battery 90 is inserted longitudinally into the cavity 96. In further examples, an opening may be along a top surface or a bottom surface of the down tube member 54b, such that the battery 90 is inserted vertically into the cavity 96.

As described above, the motor 94 may be arranged, for example, within a bottom portion of the down tube member 54b, such that the battery 90 is located above the motor 94. The bicycle 10 may also include a guard 104 (FIG. 1) coupled to the down tube member 54b and/or a bottom bracket of the bicycle 10. The guard 104 may be, or include, a motor housing to protect the motor 94.

The motor 94 may be electrically connected to the battery 90 and may be configured to receive electricity from the battery 90. In these examples, the motor 94 may be an electric motor. The motor 94 may partially or entirely motively power the bicycle 10. In some examples, the motor 94 may provide assistance to the user and may be coupled, for example, to a set of crank arms 106 (FIG. 1). In some embodiments, when the user stops pedaling, the motor 94 may deactivate and stop providing assistance to the user. In some embodiments, the bicycle 10 may be operated in a mode that allows the bicycle 10 to be operated without assistance from the motor 94.

In the illustrated embodiment of FIGS. 1-3, the bicycle 10 also may include a battery 91 (FIG. 3). The battery 91 is similar to battery 90, but is externally mounted on (rather than internally mounted in) one of the frame members 54 of the frame 14 (e.g., the down tube member 54b). In many examples, the battery 91 may be removably mounted to the one of the frame members 54 of the frame 14. FIGS. 1 and 2 show the bicycle 10 when the battery 91 is removed from the bicycle 10, and FIG. 3 shows the bicycle 10 when the battery 91 is mounted on the bicycle 10.

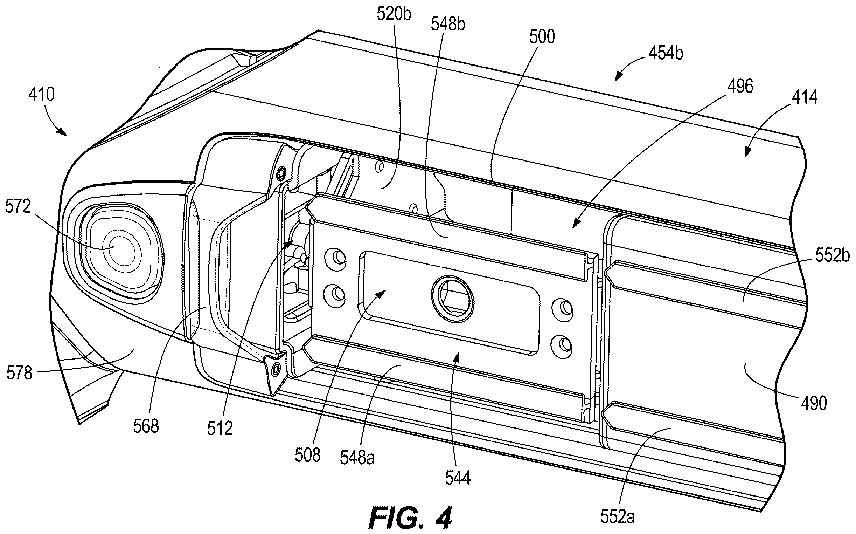

With reference to FIGS. 4-8, an example of a portion of a bicycle 410 having a battery 490 is illustrated. In some examples, the bicycle 410 (or at least one or more components of the bicycle 410) may be similar or identical to the bicycle 10 of FIGS. 1-3, and vice versa. Also, in some examples the battery 490 (or at least one or more components of the battery 490) may be similar or identical to the battery 90 of FIGS. 1-3, and vice versa.

In some examples the bicycle 410 may include an adapter 508 that facilitates the use of multiple, differently configured batteries with the bicycle 410 (e.g., within a cavity such as cavity 496 of the bicycle 410). For example, the adapter 508 may facilitate using multiple, differently sized batteries with the bicycle 410 (e.g., within a cavity such as cavity 496 of the bicycle 410). In some of these examples, a first battery of the multiple, differently sized batteries to be used with the bicycle 410 may be smaller in size (e.g., shorter in length) than the cavity (e.g., the cavity 496) of the bicycle 410 and than a size of a second battery of the multiple differently sized batteries. The adapter 508 may include a bracket, arm, or other structure, and may be removably coupled to the battery 490 (e.g., so that the adapter 508 may be used with other batteries). In some examples, the adapter 508 defines at least one hollow region or regions (e.g., to be used for storage). While a certain shape and size of adapter is illustrated, the adapter 508 may have any of a variety of other shapes and sizes than that shown. Additionally, while the illustrated adapter 508 is rigid, in some examples one or more portions of the adapter 508 may be flexible, or compressible.

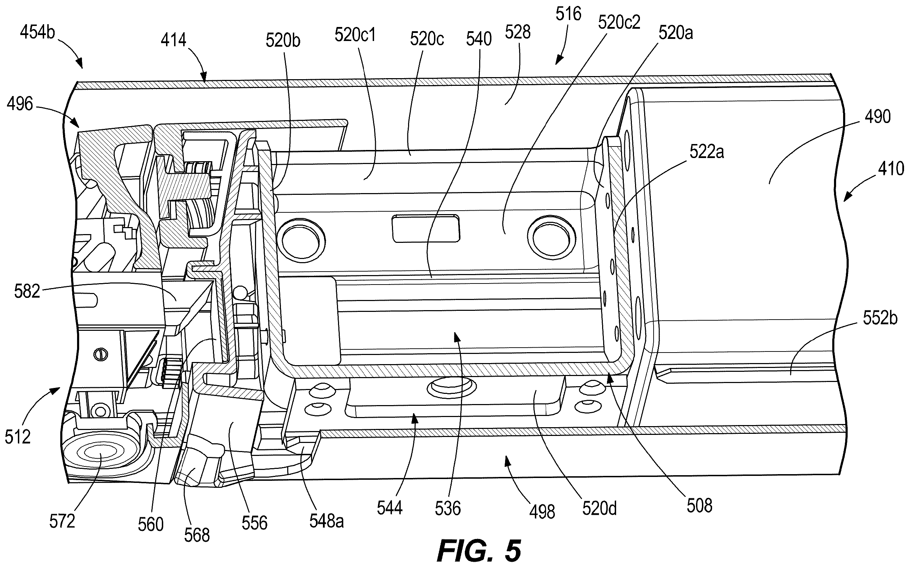

In the illustrated example, and with continued reference to FIGS. 4 and 5, the adapter 508 is disposed within the cavity 496 of the down tube member 454b, and is removably coupled to the battery 490 (e.g., to one end of the battery 490). The adapter 508 may be removably coupled to the battery 490 by one or more fastening members (e.g., screw, bolt, clip, or other fastening member), so that the adapter 508 may be a separate structure from the battery 490. In many examples, manufacturing the adapter 508 to be removably coupled to the battery 490 and to be a separate structure from the battery 490 may allow the adapter 508 to function with and be coupled to other batteries (e.g., the same sized batteries or other sized batteries). In some examples, the adapter 508 and other batteries also may be used with the bicycle 410, or in other examples, may be used with a different bicycle. In further examples, adapter 508 may be one of a set of adapters similar to adapter 508, wherein each of the adapters has a different size (e.g., length), and is sized and shaped to be coupled to batteries of different sizes (e.g., lengths), to permit each of the batteries to be inserted into the same cavity (e.g., cavity 496), or to different cavities in different bicycles. In the illustrated example in FIGS. 4 and 5, the battery 490 is shorter in size (e.g., for lower range use) than a second battery that may be used with the bicycle 410 (e.g., for higher range use). In many examples, the second battery may be similar or identical to the battery 90 (FIG. 1), and the battery 490 also may be similar but shorter in size (e.g., shorter in length) than the battery 90 (FIG. 1). Further, the second battery may be used with the bicycle 410 without using the adapter 508, and the adapter 508 may be coupled to the end of battery 490, such that the overall battery 490 and adapter 508 may be used instead of the second battery.

As illustrated in FIGS. 4 and 5, the bicycle 410 may further include a lock mechanism 512 that is coupled (e.g., releasably coupled) to the adapter 508 and is positioned opposite the battery 490. As described in further detail below, the lock mechanism 512 may facilitate releasable attachment of the overall battery 490 and the adapter 508 to a frame 414.

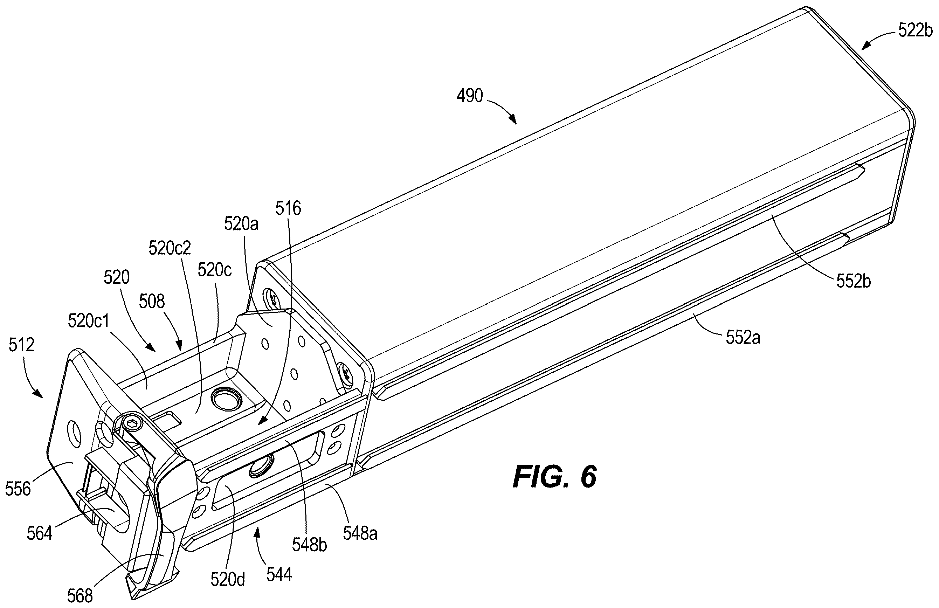

With reference to FIGS. 6-7D, in some examples the adapter 508 itself may include a storage compartment 516. The storage compartment 516 may be defined for example by one or more walls 520 of the adapter 508. In the illustrated embodiment of FIGS. 6-7D, the one or more walls 520 may include walls 520a-d. The storage compartment 516 may be sized and shaped to receive and store one or more objects (e.g., bag, riding gear, tools, spare parts, etc.) within the down tube member 454b (FIGS. 4 & 5). In the illustrated embodiment of FIGS. 6-7D, the one or more walls 520 are integrally formed together as a single piece, although in other examples one or more of the walls may be removable and/or adjustable. In the illustrated embodiment of FIGS. 6-7D, the one or more walls 520 may include a first wall 520a that defines a first end of the adapter 508, and a second wall 520b that defines a second end of the adapter 508 located opposite the first end. The one or more walls 520 may further include a third wall 520c and a fourth wall 520d extending between the first wall 520a and the second wall 520b. Other examples include other numbers and orientations of walls than that illustrated (e.g., three walls, five walls, six walls, etc.).

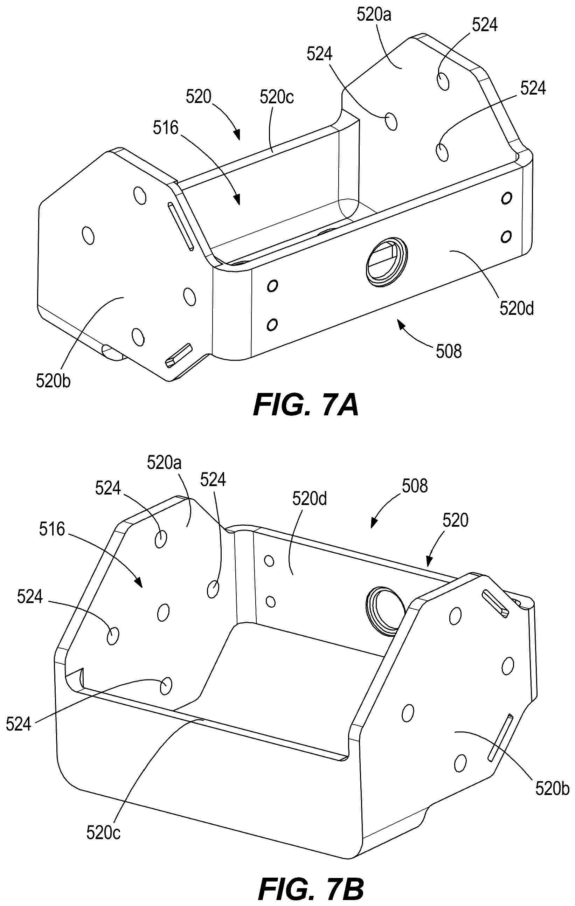

With reference to FIG. 5, in the illustrated example the first wall 520a may be coupled (e.g., with one or more fasteners) to a first end 522a of the battery 490 to thereby removably couple the adapter 508 to the battery 490. As illustrated in FIGS. 5 and 6, the first end 522a of the battery 490 is disposed opposite a second end 522b (FIG. 6) of the battery 490. The second end 522b of the battery 490 may have an electronic interface (not shown) that may electronically connect the battery 490 to a motor of the bicycle 410. The motor may be similar or identical to motor 94 (FIG. 1). As illustrated in FIGS. 7A and 7B, the first wall 520a may have multiple adapter holes 524 defined therein. The fasteners may be received within the adapter holes 524 and inserted into the battery 490 to removably couple the adapter 508 to the battery 490. Other examples include other features (e.g., holes, protrusions, fasteners, etc.) that may be used to couple the adapter 508 to the battery 490.

With continued reference to FIGS. 5 and 6, in some examples the second wall 520b may be disposed opposite of the first wall 520a. The second wall 520b may be coupled (e.g., removably coupled) for example to the lock mechanism 512 (e.g., with one or more fasteners).

With reference to FIGS. 5-7D, the third wall 520c may extend between the first wall 520a and the second wall 520b. The third wall 520c may include a first wall portion 520c1 and a second wall portion 520c2 that extends (e.g., perpendicularly) from the first wall portion 520c1. In some examples, the second wall portion 520c2 may function as a base for the storage compartment 516 so that any object stored within the storage compartment 516 may be partially seated against the second wall portion 520c2. When the adapter 508 is disposed within the cavity 496, the third wall 520c may be adjacent (e.g., seated against or in close proximity to) the down tube member 454b. In some examples, the third wall 520c may be oriented within the cavity 496 such that no other structure is disposed between an interior surface 528 of the down tube member 454b and at least a portion of the third wall 520c.

With continued reference to FIGS. 5-7D, the fourth wall 520d may also extend between the first wall 520a and the second wall 520b. The fourth wall 520d may be arranged opposite the third wall 520c such that the fourth wall 520d is located adjacent the opening 500 to the cavity 496 when the adapter 508 is disposed within the cavity 496. As such, the fourth wall 520d may be located proximate the cover 498 when the cover 498 is attached to the down tube member 454b, and for example may face the cover 498 once the cover 498 has been attached to the down tube member 454b.

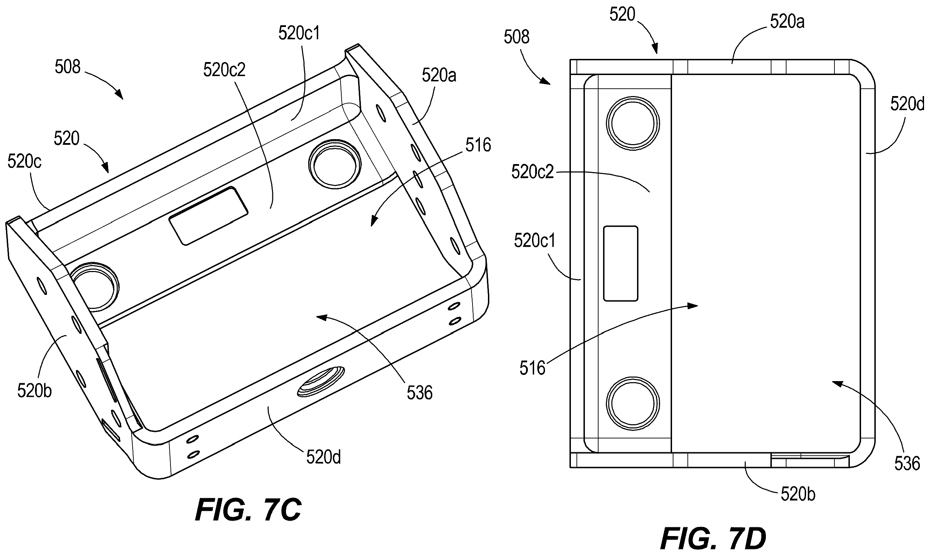

In some examples, the second wall portion 520c2 may extend in a direction parallel to respective lengths of the first wall 520a and the second wall 520b. In further examples, the second wall portion 520c2 may extend along the first wall 520a and the second wall 520b over partial portions of the respective lengths of the first wall 520a and the second wall 520b. Accordingly, the second wall portion 520c2 may be formed to partially extend along the first wall 520a and the second wall 520b such that the plurality of walls 520a-d define a gap 536 (FIGS. 5, 7C, and 7D) therebetween.

The gap 536 may extend between an edge 540 (FIG. 5) of the second wall portion 520c2 and the fourth wall 520d. The gap 536 may reduce the overall weight of the adapter 508. In some examples, the gap 536 may permit the down tube member 454b itself to at least partially define the storage compartment 516, so that a portion of an object may rest against a surface portion of the down tube member 454b itself (e.g., along with resting on the second wall portion 520c2). Accordingly, rather than having extra material disposed on the adapter 508 to further define the entirety of the storage compartment 516, a portion of the down tube member 454b itself (e.g., the interior surface 528) may instead be utilized to define part of the storage compartment 516 to thereby save weight and decrease the overall weight of the adapter 508 and the bicycle 410. In some examples, an object may sit within the storage compartment 516 without contacting the cover 498, and instead may only contact the adapter 508 and/or the interior surface 528. The down tube member 454b and/or the adapter 508 may inhibit the object from falling out of the down tube member 454b when the cover 498 is removed from the down tube member 454b. In other examples, another portion of the frame 414 (e.g., other than the down tube member 454b) may at least partially define the storage compartment 516. For example, the battery 490 and the adapter 508 may be inserted into a cavity of a top tube, or other tube, of a bicycle frame, and at least a portion of that tube may partially define the storage compartment 516.

With continued reference to FIG. 5, in some examples, no portion of the battery 490 is positioned between the storage compartment 516 and the frame 414 of the bicycle 410 on at least one side of the storage compartment 516. For example, the storage compartment 516 may be located partially or entirely between the battery 490 and the lock mechanism 512 (or an end of the adapter 508), or may be located partially or entirely between the battery 490 and an end of a frame member (e.g., the down tube member 454b).

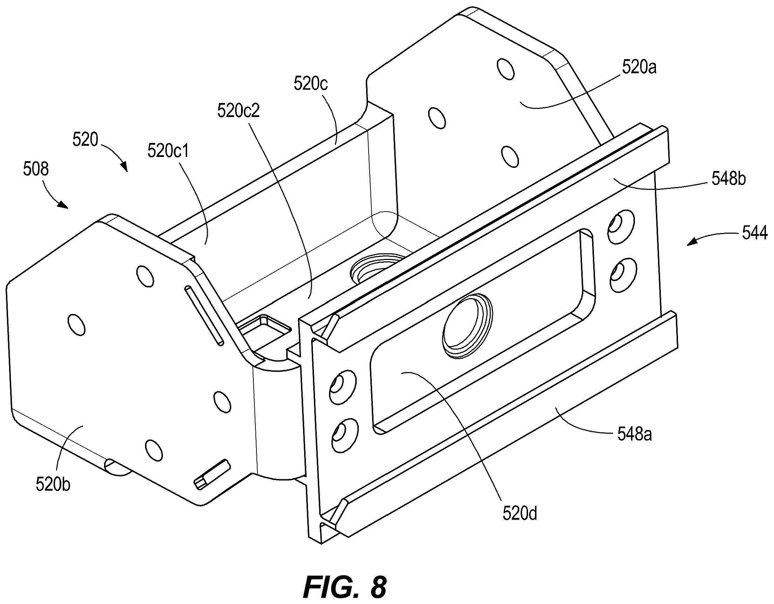

With reference to FIGS. 5, 6, and 8, in some examples the bicycle 410 may include a cover coupler 544. The cover coupler 544 may be removably coupled to the fourth wall 520d of the adapter 508 (or to a different portion of the adapter 508), for example by fasteners (not shown). In other examples, the cover coupler 544 may be omitted. As illustrated in FIGS. 6 & 8, the cover coupler 544 may include two adapter rails 548a, 548b that each extend along a length of the cover coupler 544. For example, the two adapter rails 548a, 548b may extend parallel to each other. Each adapter rail 548a, 548b may correspond to (e.g., be aligned with) a respective battery rail 552a, 552b (FIG. 6) arranged on the battery 490. The adapter rails 548a, 548b and the battery rails 552a, 552b may facilitate coupling of the cover 498 to the down tube member 454b by guiding the cover 498 to a final coupling position (e.g., the position of the cover 498 in FIG. 3). During the coupling process, the cover 498 may slide along the adapter rails 548a, 548b and the battery rails 552a, 552b, until the cover 498 reaches the final coupling position.

With reference to FIG. 4-6, and as described above, the bicycle 410 may include a lock mechanism 512 that facilitates releasable attachment of the overall battery 490 and the adapter 508 to the frame 414. In some examples, the lock mechanism 512 may include a cap 556 and a shim 560 retained on or within the cap 556. The cap 556 may be coupled (e.g., removably coupled) to the second wall 520b of the adapter 508 by fastening members (not shown). A recess 564 (FIG. 6) may be defined within the cap 556 to receive the shim 560. In many examples, the lock mechanism 512 may also include a lever 568 (e.g., a grip and/or handle) that may be coupled (e.g., pivotably coupled) to the cap 556. In some examples, the lever 568 may be grasped by a user to assist with removal of the combined adapter 508 and battery 490 from the down tube member 454b, when the adapter 508 and the battery 490 are assembled together. Further, when the combined adapter 508 and battery 490 are removed from the down tube member 454b, the lever 568 may be configured to pivot from a first position (e.g., a grip position) that is parallel or substantially parallel to the cap 556 to a second position (e.g., a handle position) that is perpendicular or substantially perpendicular to the cap 556 such that the lever 568 may function as a handle for carrying the battery 490.

With reference to FIGS. 4 and 5, in the illustrated example the bicycle 410 includes a button 572 and a latch 582 operably coupled to the button 572. For example, the button 572 may protrude from an exterior surface 578 of the down tube member 454b. The latch 582 may be arranged within the cavity 496 of the down tube member 454b to cooperate with the shim 560 of the lock mechanism 512 such that the cap 556 may be releasably coupled to the down tube member 454b. When the button 572 is undepressed, the latch 582 may be arranged to engage the shim 560, and thereby secure the adapter 508, and ultimately the battery 490, within the cavity 496. In the undepressed state of the button 572, the latch 582 lockingly engages the shim 560 so that the lock mechanism 512 may be configured to interconnect the adapter 508 with the down tube member 454b. When the button 572 is depressed by a user, the latch 582 may be actuated to disengage the shim 560 so that the cap 556 may be released from the lock mechanism 512. As such, the removal of the adapter 508 and the battery 490 from the cavity 496 of the down tube member 454b may be permitted. The user then may grasp the lever 568 to pull the adapter 508 and the battery 490 out of the down tube member 454b.

Other examples include various other lock mechanisms than that illustrated. In yet other examples, the bicycle 410 does not include a lock mechanism 512 coupled to the end of the adapter 508.

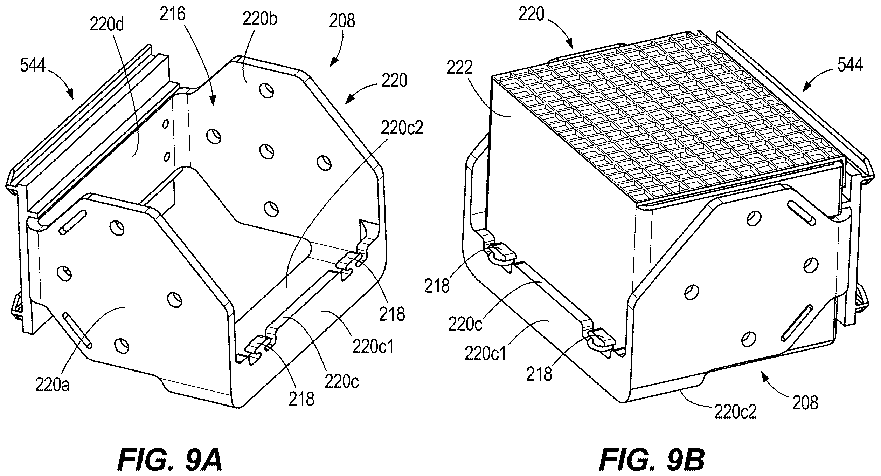

With reference to FIGS. 9A and 9B, another example of an adapter 208 is illustrated. The adapter 208 may be removably coupled to the battery 490 of FIGS. 4-8 (or a different battery) and be disposed within the cavity 496 of the down tube member 454b of FIGS. 4-8 (or a different cavity of the bicycle 410 of FIGS. 4-8 or different bicycle). In some examples, and as seen in FIG. 9A and 9B, the cover coupler 544 of FIGS. 4-6 and 8 may be removably coupled to the adapter 208, although in other examples the cover coupler 544 is not included, or a different cover coupler is provided. In some examples, the adapter 208 (or at least one or more components of the adapter 208) may be similar or identical to the adapter 508 of FIGS. 4-8, and vice versa.

With continued reference to FIGS. 9A and 9B, the adapter 208 may include a pair of hooks 218 disposed on one or more walls 220 of the adapter 208. For example, the one or more walls 220 may include walls 220a, 220b, 220c, 220d. Further, the wall 220c may include a first wall portion 220c1 and a second wall portion 220c2, and the hooks 218 may be disposed on the first wall portion 220c1. The hooks 218 may be configured to attach to an object 222 (e.g., bag or box) disposed within a storage compartment 216. The hooks 218 may further secure the object 222 within the storage compartment 216. As such, the hooks 218 may prevent the object 222 from falling into areas of the cavity 496 of FIGS. 4-8 and/or obstructing operation of the battery 490 of FIGS. 4-8. In the illustrated embodiment of FIGS. 9A and 9B, the other walls of the one or more walls 220 (e.g., 220a, 220b, 220c2, 220d) may not include a hook. In other embodiments, one or more other walls of the one or more walls 220 (e.g., 220a, 220b, 220c2, 220d) may be formed with at least one hook (e.g., hooks 218).

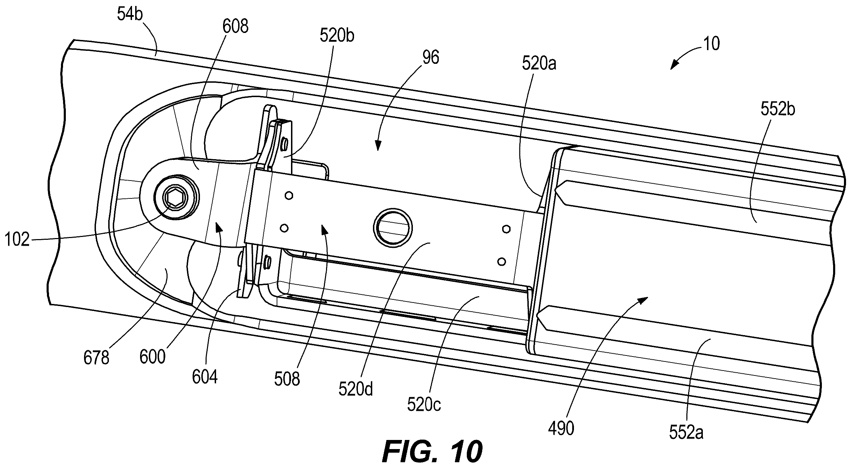

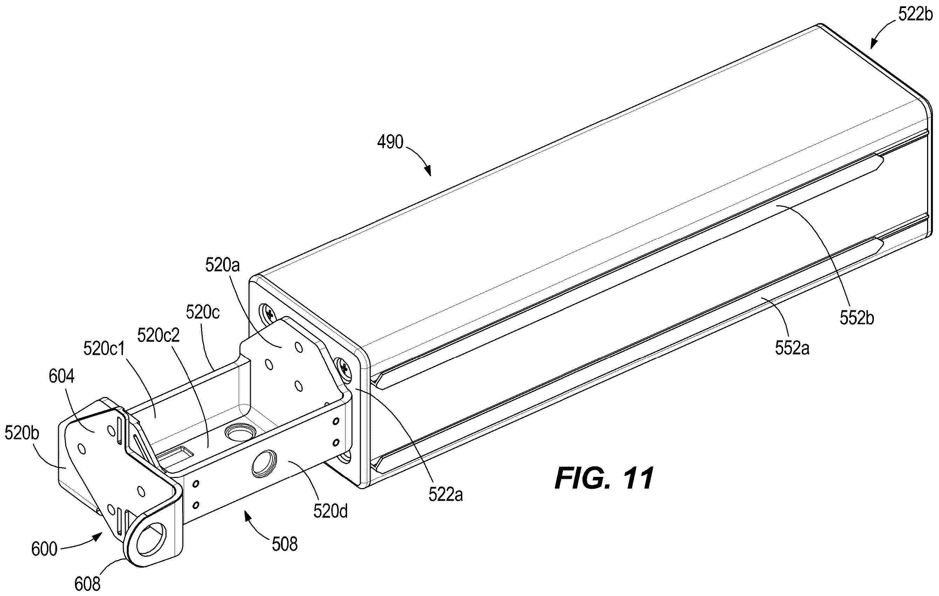

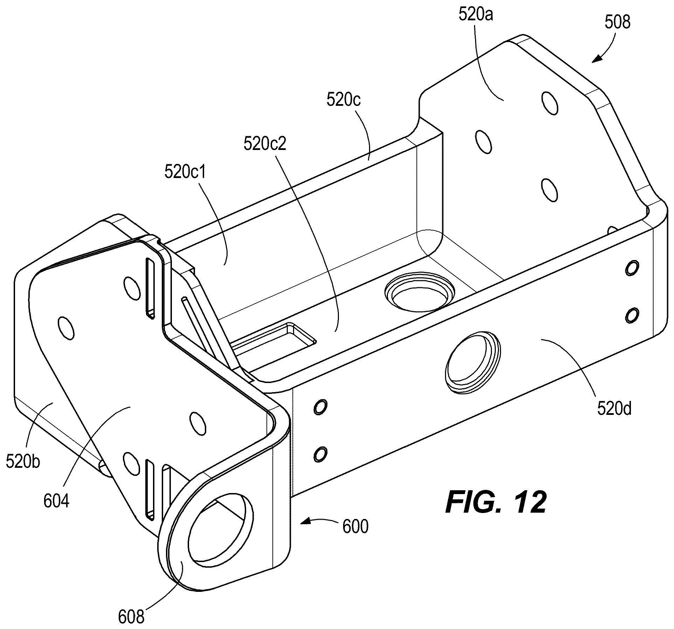

Turning ahead in the drawings, FIGS. 10-13B illustrate an example of a bracket 600. In many examples the bracket 600 may be removably coupled to the adapter 508, as illustrated at FIGS. 10-12, and the adapter 508 may be removably coupled to the battery 490, as illustrated at FIGS. 10 and 11. In further examples, the bracket 600, the adapter 508, and the battery 490 may be received at a portion of the bicycle 10 (e.g., within the cavity 96 of the down tube member 54b of the bicycle 10), as illustrated at FIG. 10. In many examples, the bracket 600 and the battery 490 are coupled to the adapter 508 at opposite ends of the adapter 508.

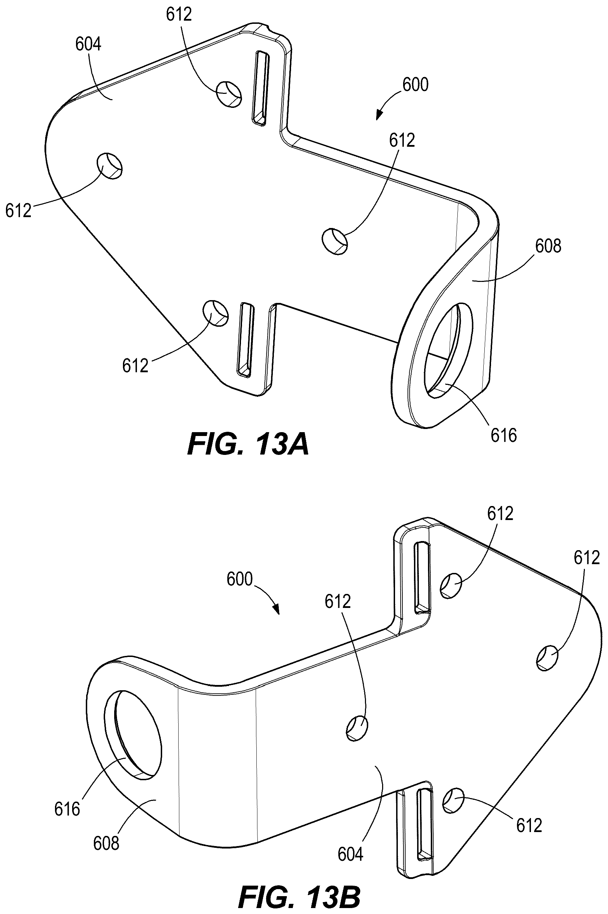

In many examples, the bracket 600 may include a first bracket portion 604 and a second bracket portion 608 extending (e.g., perpendicularly) from the first bracket portion 604 such that the bracket 600 may be formed as an L-bracket. Other examples may include other shapes than an L-shape. Multiple fastening holes 612 (FIGS. 13A and 13B) may be defined within the first bracket portion 604 and may be configured to receive fasteners (not shown) to couple the bracket 600 to one of the one or more walls 520 of the adapter 508 of FIGS. 4-8 (e.g., to the wall 520b). Additionally, the second bracket portion 608 may have a bracket hole 616 (FIGS. 13A & 13B) defined therein.

With reference to FIG. 10, in many examples the first bracket portion 604 may be removably coupled to the second wall 520b of the adapter 508. Further, when the bracket 600 is coupled to the adapter 508, the first bracket portion 604 may extend into the cavity 96 of the down tube member 54b to be removably coupled to the second wall 520b of the adapter 508. Additionally, the second bracket portion 608 may extend from the first bracket portion 604 (and for example out of the cavity 96) such that the second bracket portion 608 is arranged to extend across an exterior surface 678 (FIG. 10) of the down tube member 54b. As such, the bracket hole 616 may become coaxial with a frame hole (not shown) defined within the exterior surface 678 of the down tube member 54b. The fastening member 102 (FIG. 3) of the bicycle 10 may then be inserted through the bracket hole 616 to securely couple the bracket 600 to the down tube member 54b. As such, the bracket 600 may be configured to interconnect the adapter 508 and the battery 490 with the down tube member 54b when the bracket 600 is coupled to the down tube member 54b. In some examples, the fastening member 102 may (e.g., additionally) be inserted through a cover hole (not shown) defined within the cover 98 (FIG. 3) of the bicycle 10 to securely couple the cover 98 to the down tube member 54b.

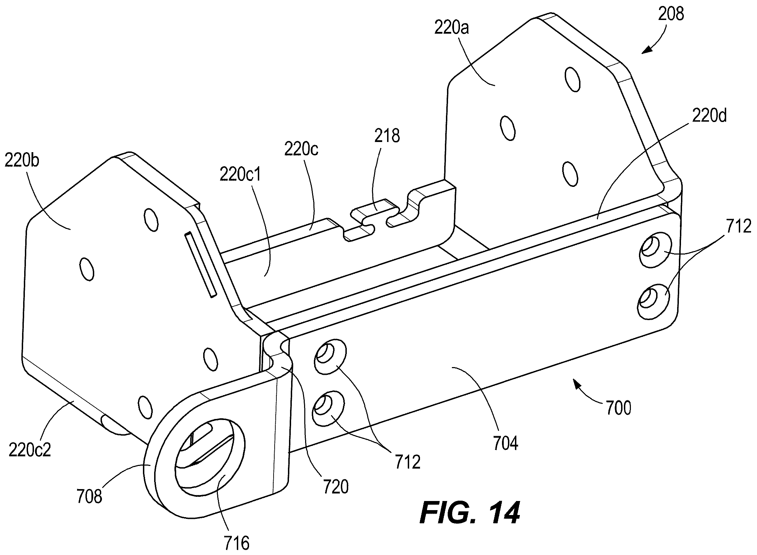

With reference to FIG. 14, another example of a bracket 700 is illustrated. In some examples, the bracket 700 (or at least one or more components of the bracket 700) may be similar or identical to the bracket 600 of FIGS. 10-13B, and vice versa.

In the illustrated embodiment of FIG. 14, the bracket 700 may be removably coupled to the adapter 208 of FIGS. 9A and 9B. In some examples, the bracket 700 may be removably coupled to the fourth wall 220d of the adapter 208 by fasteners (not shown) extending through openings 712. A first bracket portion 704 of the bracket 700 may extend across a length (e.g., an entire length) of the fourth wall 220d. A second bracket portion 708 (e.g., with an opening 716) may be coupled to the first bracket portion 704 by a joint 720. The joint 720 may orient the second bracket portion 708 in a direction parallel to the first bracket portion 704 and the fourth wall 220d. In other embodiments, the bracket 700 may be removably coupled to the adapter 508 of FIGS. 4-8 and 10-12.

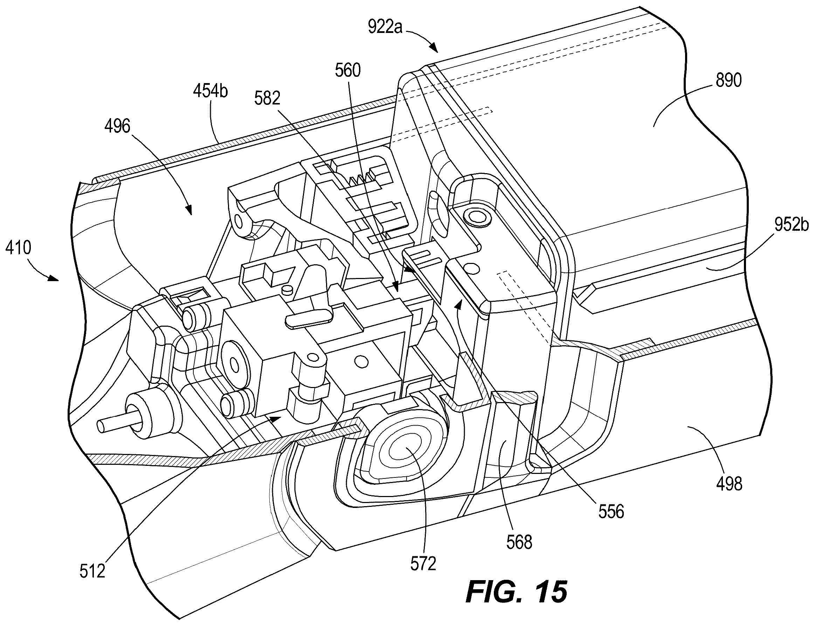

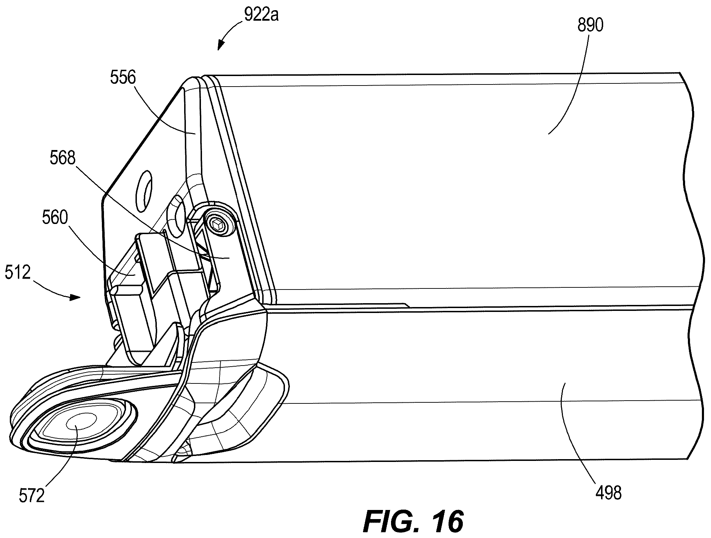

Turning ahead again in the drawings, FIGS. 15 and 16 illustrate a battery 890 disposed within the cavity 496 of the down tube member 454b of the bicycle 410. In some examples, the battery 890 (or at least one or more components of the battery 890) may be similar or identical to the battery 90 of FIG. 1 and/or the battery 490 of FIGS. 4-6, 10, and 11, and vice versa.

In the illustrated embodiment of Figs. 15-16, the battery 890 is a long sized battery (as compared for example to the short sized battery 490 of FIGS. 4-6, 10, and 11). Accordingly, no adapter is coupled to the battery 890. Due to the length of the battery 890, the lock mechanism 512 may be coupled (e.g., releasably and directly) to one end of the battery 890. The battery 890 may occupy a majority (or entirety) of the cavity 496, and be covered with the cover 498. As illustrated in FIG. 15, the battery 890 may include at least one rail (e.g., a rail 952b) to guide the cover 498.

In some examples, the cap 556 may be coupled to a first end 922a of the battery 890. The latch 582 may be arranged within the cavity 496 of the down tube member 454b to cooperate with the shim 560 of the lock mechanism 512. When the button 572 is undepressed, the latch 582 may be arranged to engage the shim 560, and thereby secure the battery 890 within the cavity 496. When the button 572 is depressed by the user, the latch 582 may be actuated to disengage the shim 560. As such, the removal of the battery 890 from the down tube member 454b may be permitted. The user may grasp the lever 568 to pull the battery 890 out of the down tube member 454b. Other examples may include other lock mechanisms than the lock mechanism 512. In some examples, no lock mechanism 512 is provided.

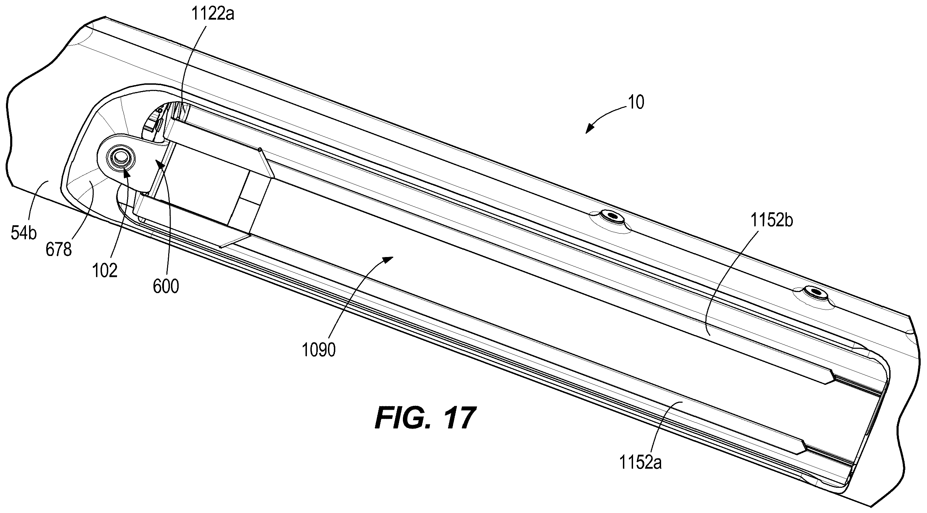

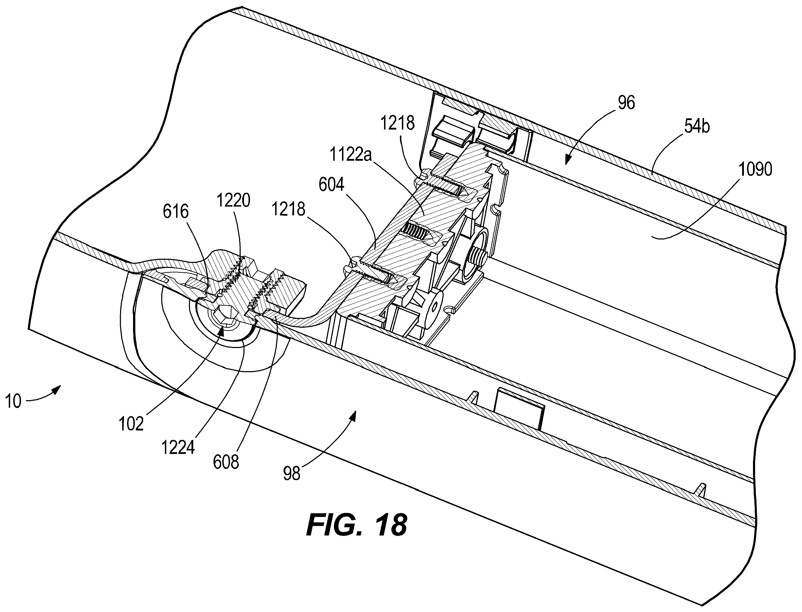

Turning ahead again in the drawings, FIGS. 17 and 18 illustrate a battery 1090 disposed within the cavity 96 of the down tube 54b of the bicycle 10. In some examples, the battery 1090 (or at least one or more components of the battery 1090) may be similar or identical to the battery 90 of FIG. 1, the battery 490 of FIGS. 4-6, 10, and 11, and/or the battery 890 of FIGS. 15 and 16, and vice versa.

In the embodiment of Figs. 17-18, the battery 1090 is another example of a long sized battery (as opposed for example to the short sized battery 490 of FIGS. 4-6). Due to the length of the battery 1090, the bracket 600 may be coupled (e.g., releasably and directly) to the battery 1090. In some examples, the battery 1090 may occupy a majority or entirety of the cavity 96 of the down tube member 54b. In some examples, the battery 1090 may include one or more rails 1152a, 1152b to guide attachment of a cover. The bracket 600 may be disposed within the cavity 96 of the down tube member 54b and removably coupled to the battery 1090. In some examples, the first bracket portion 604 (FIG. 18) may extend into the cavity 96 to be removably coupled to a first end 1122a of the battery 1090 by a plurality of fasteners 1218 (e.g., screws).

With continued reference to FIGS. 17 and 18, the second bracket portion 608 may extend from the first bracket portion 604 and out of the cavity 96 such that the second bracket portion 608 extends across the exterior surface 678 of the down tube member 54b. The fastening member 102 may be inserted through the bracket hole 616 of the second bracket portion 608 and a frame hole 1220 of the down tube member 54b to securely couple the bracket 600 to the down tube member 54b. In the illustrated embodiment of FIGS. 17 and 18, and as seen in FIG. 18, the fastening member 102 may also be inserted through a cover hole 1224 defined within the cover 98 to securely couple the cover 98 to the down tube member 54b.

Overall, and as described above, the bicycle (e.g., the bicycle 10, 410) may receive different sized batteries as desired (e.g., in a down tube), through the use of one or more of the adapters (e.g., adapters 208, 508). The adapters may be removably coupled to the batteries. Accordingly, a short sized battery may include an adapter coupled to one end of the battery, such that the battery and the adapter may be inserted into the same cavity of a bicycle as a larger sized battery. The same adapter may also be coupled to another battery to permit insertion of the other battery into a cavity (e.g., the same cavity or a different cavity of a different bicycle), and/or a different adapter may be used for different sized battery.

In some examples, and as described above, the adapter (e.g., the adapter 208, 508) may also include a storage area, to facilitate storage of one or more components within the cavity (e.g., between the end of the battery and a portion of the bicycle frame). In some examples, the adapter defines the entire storage area. In other examples, a portion or portions of the bicycle frame may define a portion of the storage area.

During use, a user may select a short sized battery (with attached adapter) if the user is only traveling a short distance (e.g., short range), or does not need the full capacity offered by a larger sized battery. Additionally, or alternatively, the user may select the short sized battery to reduce the overall weight of the bicycle (e.g., with the attached adapter providing only a minimal amount of added weight to the short sized battery), or to provide added room for storage. Conversely, the user may select a large sized battery if the user is traveling a longer distance (e.g., long range), or otherwise desires the full capacity offered by the larger sized battery, and/or otherwise does not require the further storage space.

Additionally, and as described above, the bicycle may include one or more lock mechanisms (e.g., the lock mechanism 512) or brackets (e.g., the bracket 600 or 700) to facilitate attachment and/or latching of the battery into a cavity, and/or may include one or more cover couplers (e.g., the cover coupler 544), to facilitate coupling of a cover over the battery or batteries. In some examples, the lock mechanisms, brackets, and/or cover couplers may further allow the batteries and/or adapters described herein to be coupled to other bicycles having corresponding (or different) interfaces on the bicycle frame for receiving and attaching (e.g., latching) batteries and covers.

Some of the examples may be further described by reference to the following numbered clauses:
1. A bicycle comprising:
   a front wheel;
   a rear wheel;
   a frame coupled to and supported by the front wheel and the rear wheel, the frame having a frame member with a cavity defined therein;
   a battery disposed within the cavity; and
   an adapter that is removably coupled to the battery and removably coupled to the frame member, the adapter including a storage compartment that is at least partially defined by the frame member.
2. The bicycle of clause 1, further comprising a bracket disposed between at least a portion of the frame member and the adapter, the bracket configured to removably couple the adapter to the frame member.
3. The bicycle of clause 2, wherein the bracket includes a first portion coupled to the adapter and a second portion removably coupled to the frame member by a fastener.
4. The bicycle of clause 2 or paragraph claim 3, wherein the bracket is an L-shaped bracket.
5. The bicycle of any of the preceding clauses, further comprising a cap coupled to the adapter, the cap releasably coupled to the frame member.
6. The bicycle of clause 5, wherein the frame member includes a latch movable between an engaged position, in which the cap is securely coupled to the latch, and a disengaged position, in which the cap is released from the latch.
7. The bicycle of any of the preceding clauses, wherein the frame member is a down tube member of the frame.
8. A bicycle comprising:
   a front wheel;
   a rear wheel;
   a frame coupled to and supported by the front wheel and the rear wheel, the frame having a frame member with a cavity defined therein;
   a battery disposed within the cavity;
   a cover removably coupled to the frame member to enclose the cavity and secure the battery within the cavity;
   an adapter removably coupled to the battery and removably coupled to the frame member; and
   a cover coupler coupled to the adapter and configured to facilitate coupling of the cover to the frame member, wherein the cover coupler includes an adapter rail.
9. The bicycle of clause 8, further comprising a bracket disposed between at least a portion of the frame member and the adapter, the bracket configured to couple the adapter to the frame member.
10. The bicycle of clause 9, wherein the bracket includes a first end coupled to the adapter and a second end removably coupled to the frame member by a fastener, wherein the fastener further couples the cover to the frame member.
11. The bicycle of any of clauses 8-10, further comprising a cap coupled to the adapter, the cap releasably coupled to a latch disposed within the frame member.
12. The bicycle of any of clauses 8-11, wherein the frame member is a down tube member of the frame.
13. An assembly comprising:
   a battery configured to power a motor of an electric bicycle; and
   an adapter removably coupled to one end of the battery, the adapter including a plurality of walls defining at least a portion of a storage compartment, wherein a gap extends between two of the plurality of walls.
14. The assembly of clause 13, wherein the plurality of walls includes a first wall removably coupled to the battery and a second wall disposed opposite the first wall and configured to be coupled to a frame member of the electric bicycle.
15. The assembly of clause 14, further comprising a bracket including a first portion and a second portion, the first portion removably coupled to the second wall of the plurality of walls and the second portion configured to be removably coupled to the frame member to thereby couple the adapter to the frame member.
16. The assembly of clause 15, wherein the bracket is an L-shaped bracket.
17. The assembly of any of clauses 14-16, further comprising a cap coupled to the second wall of the plurality of walls, wherein the cap is configured to be releasably coupled to the frame member to couple the adapter with the frame member.
18. The assembly of any of clauses 14-17, further comprising the frame member, wherein the frame member defines a cavity and an opening to the cavity, wherein the plurality of walls includes a third wall and a fourth wall opposite the third wall, wherein the third wall is positioned adjacent an interior surface of the frame member such that no other structure is disposed between at least a portion of the third wall and the frame member, wherein the fourth wall is positioned adjacent the opening of the cavity in the frame member, and wherein the gap is defined as a gap between the third wall and the fourth wall.
19. The assembly of clause 18, further comprising a cover removably coupled to the frame member to enclose the cavity and secure the battery within the cavity.
20. The assembly of clause 18 or clause 19, wherein the frame member is a down tube member of the frame.
21. A method of replacing a battery in an electric bicycle, the method comprising:
   removing a first battery from a cavity in a frame member of the electric bicycle, wherein the first battery has a first length;
   attaching an adapter to an end of a second battery, the second battery having a second length that is less than the first length; and
   inserting the combined adapter and second battery into the cavity;
   wherein the adapter includes a storage compartment that is at least partially defined by the frame member.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and advantages of the disclosure are set forth in the following claims.

## Claims

1. A bicycle comprising:
a front wheel;
a rear wheel;
a frame coupled to and supported by the front wheel and the rear wheel, the frame having a frame member with a cavity defined therein;
a battery disposed within the cavity; and
an adapter that is removably coupled to the battery and removably coupled to the frame member, the adapter including a storage compartment that is at least partially defined by the frame member.

2. The bicycle of claim 1, further comprising a bracket disposed between at least a portion of the frame member and the adapter, the bracket configured to removably couple the adapter to the frame member.

3. The bicycle of claim 2, wherein the bracket includes a first portion coupled to the adapter and a second portion removably coupled to the frame member by a fastener.

4. The bicycle of any of the preceding claims, further comprising a cap coupled to the adapter, the cap releasably coupled to the frame member.

5. The bicycle of claim 4, wherein the frame member includes a latch movable between an engaged position, in which the cap is securely coupled to the latch, and a disengaged position, in which the cap is released from the latch.

6. A bicycle comprising:
a front wheel;
a rear wheel;
a frame coupled to and supported by the front wheel and the rear wheel, the frame having a frame member with a cavity defined therein;
a battery disposed within the cavity;
a cover removably coupled to the frame member to enclose the cavity and secure the battery within the cavity;
an adapter removably coupled to the battery and removably coupled to the frame member; and
a cover coupler coupled to the adapter and configured to facilitate coupling of the cover to the frame member, wherein the cover coupler includes an adapter rail.

7. The bicycle of claim 6, further comprising a bracket disposed between at least a portion of the frame member and the adapter, the bracket configured to couple the adapter to the frame member, and optionally
wherein the bracket includes a first end coupled to the adapter and a second end removably coupled to the frame member by a fastener, wherein the fastener further couples the cover to the frame member.

8. The bicycle of claim 6 or claim 7, further comprising a cap coupled to the adapter, the cap releasably coupled to a latch disposed within the frame member.

9. An assembly comprising:
a battery configured to power a motor of an electric bicycle; and
an adapter removably coupled to one end of the battery, the adapter including a plurality of walls defining at least a portion of a storage compartment, wherein a gap extends between two of the plurality of walls.

10. The assembly of claim 9, wherein the plurality of walls includes a first wall removably coupled to the battery and a second wall disposed opposite the first wall and configured to be coupled to a frame member of the electric bicycle.

11. The assembly of claim 10, further comprising a bracket including a first portion and a second portion, the first portion removably coupled to the second wall of the plurality of walls and the second portion configured to be removably coupled to the frame member to thereby couple the adapter to the frame member.

12. The bicycle of any of claims 2-3 or the assembly of claim 11, wherein the bracket is an L-shaped bracket.

13. The assembly of any of claims 10-12, further comprising a cap coupled to the second wall of the plurality of walls, wherein the cap is configured to be releasably coupled to the frame member to couple the adapter with the frame member.

14. The assembly of any of claims 10-13, further comprising the frame member, wherein the frame member defines a cavity and an opening to the cavity, wherein the plurality of walls includes a third wall and a fourth wall opposite the third wall, wherein the third wall is positioned adjacent an interior surface of the frame member such that no other structure is disposed between at least a portion of the third wall and the frame member, wherein the fourth wall is positioned adjacent the opening of the cavity in the frame member, and wherein the gap is defined as a gap between the third wall and the fourth wall, and optionally
further comprising a cover removably coupled to the frame member to enclose the cavity and secure the battery within the cavity.

15. The bicycle of any of claims 1-8 or the assembly of claim 14, wherein the frame member is a down tube member of the frame.
